# DEMANDE DE BREVET EUROPEEN

(11) **EP 0 749 914 A1**
(43) Date de publication de la demande: **27.12.1996**
(21) Numéro de dépôt: 96401299.1
(22) Date de dépôt: 14.06.1996
(51) Int. Cl.: B65D 85/48, B65G 49/06

(54) **Espaceur pour produits en feuilles et procédé de fabrication**

(30) Priorité: 22.06.1995 FR 9507465
(71) Demandeur: SAINT GOBAIN VITRAGE INTERNATIONAL, F-92400 Courbevoie (FR); NORTON PERFORMANCE PLASTICS S.A., 4650 Chaineux (BE)
(72) Inventeur: Ladang, Michel, 4651 Herve (BE); Testouri, Dhafer, 4820 Dison (BE)
(74) Mandataire: Muller, René

(57) **Abrégé**

L'invention concerne un espaceur destiné à s'intercaler temporairement entre deux produits en feuilles en particulier entre deux vitrages, et présentant une adhésion différenciée avec ces deux produits en feuilles. L'espaceur est essentiellement en un matériau thermofusible ayant une capacité d'absorption des chocs et une aptitude à procurer à une de ses deux faces une adhésion contrôlée et désirée avec les feuilles à séparer.

## Description

La présente invention concerne la manutention, le transport et le stockage de produits en feuilles notamment de produits fragiles tels que des vitrages. Plus particulièrement l'invention concerne un espaceur destiné à s'intercaler temporairement entre lesdits produits en feuilles disposés de manière essentiellement parallèle les uns par rapport aux autres dans des palettes ou dans des caisses.

Bien que la description suivante soit faite en relation à un espaceur pour vitrages, d'autres applications de l'espaceur pour d'autres produits en feuilles restent dans le cadre de l'invention. L'invention concerne aussi un procédé pour la fabrication dudit espaceur.

Les vitrages, notamment les vitrages pour véhicules, tels les pare-brise, les lunettes arrières et les vitrages latéraux sont normalement placés dans une position sensiblement verticale dans des palettes pour leur transport et leur stockage. Pour éviter tout dommage ou bris de vitrage, dus notamment à des contacts entre-eux au cours de leur transport, les vitrages sont maintenus écartés les uns des autres dans des palettes. Ainsi, ils peuvent être maintenus écartés dans leur partie basse par des crémaillères fixées à la base de la palette, munies de créneaux présentant une largeur égale à l'épaisseur du vitrage de façon à permettre le calage desdits vitrages, et d'autre part dans leur partie haute par des cavaliers espaceurs qui chevauchent le chant des vitrages et séparent deux vitrages voisins en maintenant un espace intercalaire.

Cependant, de plus en plus de vitrages pour véhicules sont livrés aux constructeurs en étant équipés de profils, notamment de profils périphériques, en matière plastique obtenus par exemple par encapsulation ou extrusion. Ces profils peuvent être déposés en périphérie des vitrages, avec des largeurs et épaisseurs variables et servent par exemple au montage des vitrages dans les baies de carrosserie des véhicules. Ils peuvent aussi servir de coulisse pour vitrages latéraux ou toits coulissants. Pour assurer ces fonctions, les profils équipant les vitrages ont des formes et des dimensions bien définies. Il est donc important de ne pas détériorer ou même de déformer ces profils lors de la manutention des vitrages et notamment lors de leur transport. En outre, les vitrages étant disposés dans la palette en étant légèrement inclinés de manière à améliorer leur stabilité, forment une sorte d'empilement, les vitrages suivants exerçant une force, composante de leur poids, sur les vitrages précédents, placés en début de l'empilement. Le cavalier espaceur doit par conséquent présenter un profil adapté au profil périphérique du vitrage. Il s'ensuit qu'un même type de cavalier ne peut être utilisé pour plusieurs types de vitrages.

A la place des cavaliers, il est aussi connu d'utiliser des espaceurs qui s'intercalent entre deux vitrages voisins en s'appliquant sur les surfaces du verre. On connait ainsi un espaceur formé d'un corps parallélépipédique en un matériau peu compressif et dont une face est non adhésive avec une surface de verre, par exemple du liège, d'épaisseur sensiblement égale à la distance d'intercalaire, et d'une couche recouvrant la face opposée, en un matériau mou et compressif, par exemple en PVC cellulaire, permettant une adhésion au moins temporaire avec la surface de verre, cette adhésion ne laissant pratiquement aucune trace ultérieure sur le verre.

Un inconvénient de ce type d'espaceur est qu'il ne peut généralement être réutilisé tel quel, comme peut l'être un cavalier, sa surface adhésive ayant perdu au moins une partie de ses propriétés d'adhésivité d'origine.

Un autre inconvénient plus essentiel encore est qu'il ne peut être recyclé dans une autre application du fait notamment de sa structure à deux couches à base de matériaux très différents et en particulier du liège.

On connait encore de la publication de modèle d'utilité allemand GM 92 15 354 un espaceur formé d'une matière thermoplastique telle que le PVC, qui présente une face très lisse lui procurant des propriétés d'adhésion avec une surface en verre, et une face opposée nervurée non adhésive avec une telle surface.

Un inconvénient de cet espaceur formé au préalable est qu'il implique une fabrication séparée et en un lieu différent de celui de son utilisation. Un autre inconvénient est que la face adhésive très lisse est susceptible de perdre ses propriétés d'adhésivité par contact avec des poussières, des huiles ou d'autres éléments de pollution, sans que la nature du matériau dont est formé l'espaceur puisse autoriser une réactivation aisée de cette adhésivité.

L'invention obvie aux inconvénients cités. Elle propose un nouvel espaceur destiné à s'intercaler temporairement entre deux produits en feuilles, en particulier entre deux vitrages, cet espaceur présentant deux faces essentiellement parallèles, et étant en un matériau thermofusible ayant une capacité d'absorption des chocs, et apte à procurer à une de ses faces une adhésion contrôlée avec les feuilles à séparer.

Sous un des aspects de l'invention, l'espaceur est en un matériau recyclable et sa face apte à présenter des propriétés adhésives est réactivable par une modification de son état de surface par la chaleur ou par un solvant.

En variante, la face apte à présenter des propriétés adhésives est réactivable par apport sur ladite face sous une forme liquide ou visqueuse, du même matériau qui constitue l'espaceur ou d'un matériau appartenant à la même famille en terme de recyclage.

Selon une autre caractéristique de l'espaceur celui-ci peut être fabriqué aussi bien hors du site d'utilisation que directement sur ce site. En outre, son adhésion avec les feuilles à séparer peut être réglée quelque soit la température du site d'utilisation.

Sous une forme de réalisation selon l'invention, l'espaceur est choisi parmi les matériaux qui ont une température de « fusion » inférieure à 250°C et de préférence comprise entre 50 et 200°C et de manière encore plus préférée comprise entre 60 à 100°C. Dans cette forme de réalisation, il s'agit de fondre ou tout au moins de ramollir et de rendre conformable à une température peu élevée la face de l'espaceur destinée à venir adhérer sur la feuille à séparer. De préférence le matériau présente un intervalle étroit de température durant laquelle s'opère la «fusion ».

Alors qu'une face de l'espaceur doit présenter des propriétés adhésives déterminées avec les produits à séparer, en étant suffisamment adhésive pour rester en place durant toute la durée de l'utilisation de l'espaceur, mais pas trop pour que l'espaceur puisse être retiré facilement le moment venu, sans laisser de trace (ou marque) sur le produit à séparer, en particulier lorsqu'il s'agit de vitrage, l'autre face de l'espaceur, en revanche, doit être non adhésive pour éviter notamment tout problème au moment du désempilage des produits en feuilles. Cette autre face peut être avantageusement structurée (non plane).

Un matériau de base apte à former l'espaceur selon l'invention peut être choisi parmi des copolymères du type polyéthylène avec chaines polaires tel que des copolymères éthylène-vinyl-acétate modifié ou non (EVA), des copolymères éthylène-butyl-acrylate, éthylène-méthyl-acrylate, des terpolymères éthylène-ester acrylique-anhydride maléique, des polyamides et leur copolymères.

Des EVA particulièrement préférés contiennent de préférence une teneur en vinyl-acétate de 26 à 30 % environ et présentent un indice de fluidité à l'état fondu d'environ 25 de manière à pouvoir être ramolli rapidement, le cas échéant au moment de l'application de l'espaceur sur le produit.

Le matériau de base doit présenter des propriétés mécaniques, notamment d'absorption d'énergie (ou des chocs) en étant néanmoins suffisamment rigide pour remplir la fonction espaceur.

Pour améliorer les propriétés d'absorption d'énergie on peut avantageusement introduire dans la composition du matériau un polymère ou copolymère thermoplastique du type styrène-butadiène-styrène.

Ce peut être aussi du caoutchouc naturel, du caoutchouc butyl, du polyisobutylène, du SBR, du polybutadiène, de l'EPDM (éthylène-propylènediène-monomères), de l'EPR, du caoutchouc nitrile.

De préférence, on utilise des CARIFLEX^{R} qui sont des polymères di ou tri blocs/styrène-butadiène ou isoprène ou éthylène-butylène.

Afin d'améliorer la cohésion du matériau, on peut avantageusement ajouter à la composition une huile minérale par exemple et de préférence une huile paraffinique qui peut agir en outre sur la viscosité à l'état fondu du matériau.

On peut encore introduire dans la composition une cire qui améliore la fluidité à chaud. La cire permet en outre d'ajuster le niveau de non adhésion de la face non adhésive.

De nombreuses cires cristallines ou non et de nombreuses paraffines à structures macromoléculaire plus linéaires, couvrant une large gamme de points de congélation (50 à 100°C) et de dureté peuvent être utilisées. De préférence, on choisit les cires ayant un point de congélation élevé notamment compris entre 88 et 92°C, et une dureté élevée.

D'autres additifs peuvent encore être ajoutés à la composition. Il peut s'agir de charges telle la craie qui outre la régulation de la dureté peut faciliter le mélange des composants tout en diminuant le prix de revient de l'espaceur. Il peut encore s'agir d'anti-oxydants, de colorants, etc...

Dans une forme de réalisation de l'espaceur selon l'invention, il est formé d'un matériau comprenant exprimés en pourcentages en poids :
- 20 à 70 % d'un polymère ou copolymère du type polyéthylène avec chaînes polaires,
- 10 à 50 % d'un matériau présentant des propriétés d'absorbeur d'énergie,
- 10 à 50 % d'une cire,
- 10 à 40 % d'une huile minérale.

Dans une forme de réalisation préférée de l'espaceur, celui-ci est formé d'un matériau comprenant exprimés en pourcentages en poids :
- 20 à 70 % d'un copolymère EVA,
- 10 à 50 % d'un copolymère styrène-butadiène-styrène,
- 10 à 50 % d'une cire,
- 10 à 40 % d'une huile paraffinique.

Un des avantages de l'espaceur selon l'invention est qu'il peut être fabriqué directement sur le site d'utilisation au moment de l'emploi comme décrit par la suite, sa face étant alors adhésive de par son procédé même de fabrication, ou au contraire l'espaceur peut être fabriqué au préalable en étant alors généralement réactivé au moment de son emploi.

Un autre avantae de l'espaceur selon l'invention est qu'il peut être déposé en discontinu du fait notamment du matériau utilisé qui par exemple ne provoque pas de gonflement de matière à la sortie d'une filière d'extrusion.

D'autres caractéristiques et avantages du séparateur selon l'invention apparaitront dans l'exemple suivant :

### EXEMPLE :

On prépare le matériau de base pour un séparateur à partir de la composition suivante exprimée en parties en poids :
- 33 parties d'un copolymère EVA contenant 28 % en poids d'acétate de vinyle et présentant un indice de fluidité de 25 selon ASTMD 1238, par exemple le produit commercialisé sous l'appellation ESCORENE^{R} de la société EXXON.
- 16,5 parties d'un copolymère styrène-butadiène-styrène (SBS) par exemple le produit commercialisé sous l'appellation EUROPRENE^{R} SOL T163 par la société ENICHEM.
- 16,5 parties d'une cire par exemple le produit commercialisé sous l'appellation ASTOR^{R} DO 820 par la société ASTOR STAG.
- 16,5 parties d'une huile paraffinique par exemple le produit commercialisé sous l'appellation ENERPAR^{R} 10 par la société BP.
- 16,5 parties d'une charge minérale par exemple le produit commercialisé sous l'appellation SETACARB ^{R} OG par la société OMYA.
- 0,4 partie d'un anti-oxydant par exemple le produit commercialisé sous l'appellation IRGANOX ^{R} 1010 par la société CIBA GEIGY.
- 0,6 partie d'un colorant par exemple le produit commercialisé sous l'appellation PLASTIPASTA NOIR ^{R} par la société INDUCOLOR.

On obtient par ce mélange un matériau thermofusible dont la « fusion » s'opère dans un intervalle de température de 65-75°C, à partir duquel on peut fabriquer l'espaceur.

Ainsi pour fabriquer un espaceur pour vitrage, on peut utiliser le procédé décrit ci-après qui est un des objets de l'invention, en suivant les étapes successives suivantes :
- remplir un réservoir du matériau thermofusible,
- fondre le matériau thermofusible,
- pomper le matériau thermofusible,
- extruder ledit matériau en contrôlant son débit volumétrique,
- remplir avec dudit matériau thermofusible une empreinte de moule servant à former l'espaceur,
et soit : appliquer la face libre encore liquide de l'espaceur sur le vitrage à séparer,
ou soit :
- refroidir le matériau thermofusible de l'élément pour le solidifier,
- démouler ledit élément,
- rendre liquide la face destinée à adhérer au vitrage à séparer,
et :
- appliquer la face liquide de l'élément pour le faire adhérer par collage sur le vitrage à séparer.

Dans le but de supprimer l'inertie et de contrôler l'épaisseur de fusion de la face rendue liquide, l'étape de liquéfaction de la face destinée à adhérer peut être réalisée par apport de matériau thermofusible fondu qui peut être le même que celui de l'élément ;

En variante, l'étape de liquéfaction de la face destinée à adhérer est réalisée par chauffage.

La face de l'espaceur opposée à la face destinée à adhérer peut être marquée de manière à lui procurer une surface structurée au cours du moulage.

Pour permettre d'automatiser le procédé ci-dessus, l'invention a encore pour objet une installation du type comprenant un dispositif vide-fût recevant un réservoir de matériau thermofusible, ledit réservoir étant relié à un pistolet volumétrique de pose de matériau thermofusible dans au moins une empreinte d 'un moule, l'installation comportant au moins un moyen de marquage venant au contact du matériau dans l'empreinte, un moyen de refroidissement et un moyen de transfert pour sortir l'élément en vue de l'apporter au poste de réalisation de la face liquide.

Suivant une autre caractéristique, l'installation comprend un moyen, en particulier une buse de dépose sur ledit élément refroidi d'une goutte de produit thermofusible liquide, ledit moyen de dépose relié au vide-fût étant situé en amont du pistolet volumétrique.

L'invention a également pour objet un dispositif selon lequel le moule comporte au moins une deuxième empreinte de la forme d'un barreau permettant de fabriquer des barreaux de produit thermofusible destinés à alimenter un pistolet manuel de pose de produit liquide sur une face de l'élément.

Suivant d'autres caractéristiques du dispositif :
- le moule et le moyen de refroidissement sont constitués par une table tournante comprenant des empreintes disposées suivant une trajectoire circulaire, la table comportant un moyen d'avance en rotation pas à pas correspondant à l'espacement de chaque empreinte, le moyen de marquage étant constitué par la forme du fond de l'empreinte ou la forme de la surface d'un pousseur venant former l'empreinte ;
- le moyen de transfert est une ventouse par aspiration.

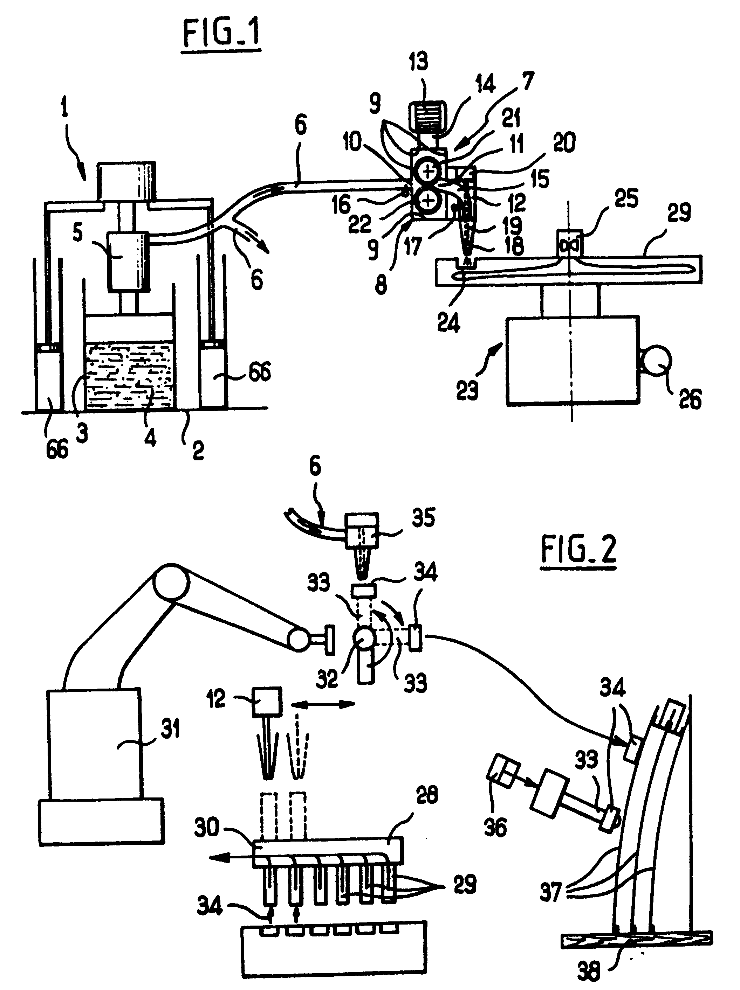

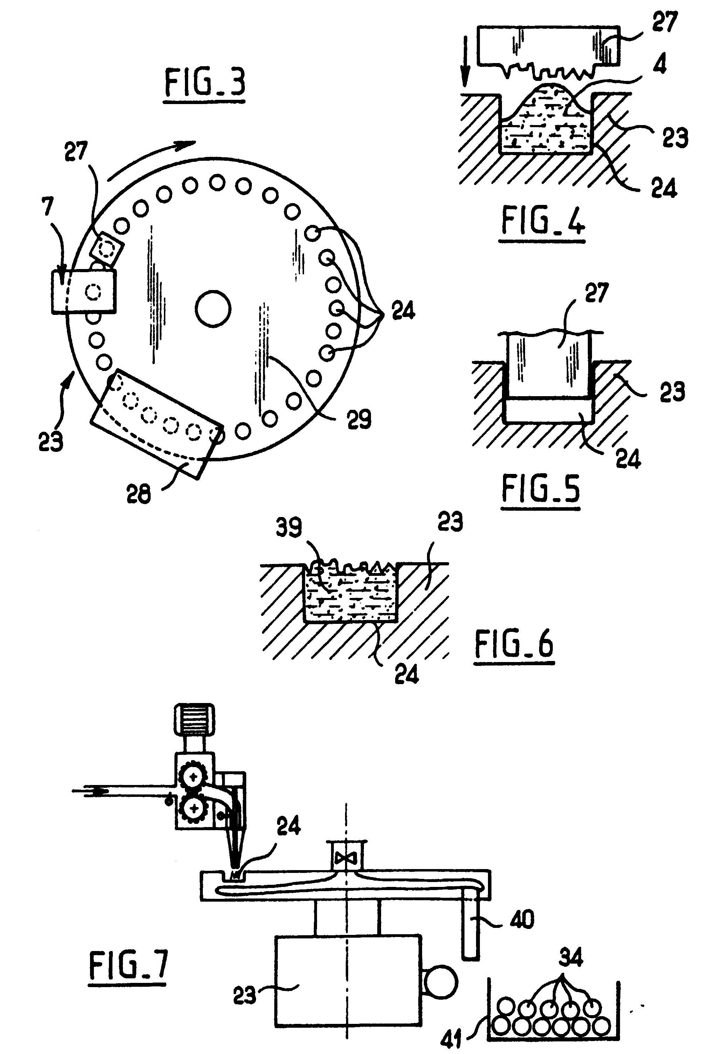

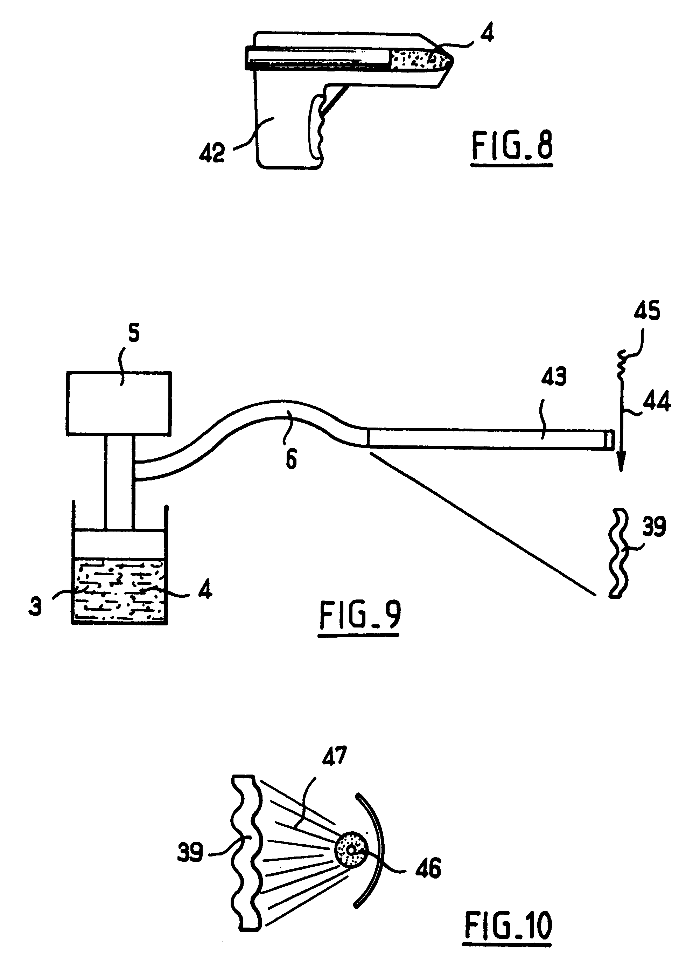

Un exemple du dispositif selon l'invention va maintenant être décrit en regard des dessins annexés sur lesquels :
. La fig. 1 représente schématiquement en coupe verticale une installation de fabrication de mise en place et de pose d'espaceurs selon l'invention et les dispositifs de fabrication.
. La fig. 2 représente schématiquement en coupe verticale, les dispositifs de mise en place et de pose d'une installation selon l'invention complétant la fig. 1.
. La fig. 3 représente en vue de dessus, la table d'indexage selon les fig. 1 et 2.
. Les fig. 4, 5 et 6 sont des vues partielles schématiques en coupe illustrant des phases de mise en forme des espaceurs.
. La fig. 7 représente schématiquement une partie d'installation selon l'invention permettant la fabrication d'éléments de calage pour la pose manuelle vue en coupe verticale.
. La fig. 8 représente un pistolet pour la pose manuelle de la face liquide.
. La fig. 9 représente une variante de dispositif de fabrication d'une installation selon l'invention.
. La fig. 10 représente une variante de l'étape du procédé de réalisation de la face liquide.

L'installation représentée à la fig. 1 comporte un dispositif vide-fût 1. Ce dispositif 1 comprend un châssis 2 sur lequel est posé un réservoir ou fût 3 rempli de produit thermofusible 4, un groupe de pompage 5 est disposé au-dessus du fût 3. Des vérins 66 ajustent le groupe de pompage 5 en fonction du niveau de la surface du produit thermofusible 4 contenu dans le fût 5. Le groupe de pompage 5 est relié par une tuyauterie 6 à un pistolet à engrenage 7 de distribution du produit chaud, c'est-à-dire sous forme liquide.

Le pistolet 7 comprend un boîtier 8 délimité par six parois planes 9. Une paroi présente une ouverture d'alimentation 10 ; la paroi en vis-à-vis comporte un orifice de sortie 11 débouchant dans une buse 12. Un moteur électrique 13 commandé par un variateur électronique est fixé sur une paroi 9.

La buse 12 et le moteur 13 sont positionnés sur le boîtier 8 par l'intermédiaire d'un élément support chauffant 14. La tuyauterie 6 d'amenée de produit thermofusible 4 est liée à l'ouverture d'alimentation 10. Une canalisation 15 relie l'orifice de sortie 11 à la buse 12. Deux prises de pression 16, 17 sont montées respectivement à l'ouverture d'alimentation 10 et à la sortie canalisation 15 dans la buse 12. La buse 12 comprend un orifice d'extrusion 18 conique creux obturable par une tige 19 formant clapet et solidaire d'un vérin de manoeuvre pneumatique 20.

Le boitier 8 contient un engrenage formé de deux pignons 21 et 22. Les pignons 21 et 22 parallèles entre eux sont montés perpendiculairement à l'orifice de sortie 11.

Le pistolet 7 alimente en produit une table d'indexage 23. La table 23 comprend des empreintes 24 pour le moulage et un moyen de refroidissement 25. La table 23 qui comprend un dispositif 26 de mise en mouvement pas à pas est circulaire comme le représente la fig. 3 et les empreintes 24 sont disposées près du bord selon une trajectoire circulaire. Un pousseur 27 permet de former les empreintes 24.

Le pistolet 7, le pousseur 27 et le préhenseur 28, tous étant mobiles par rapport à la surface 29 de la table 23, sont disposés au-dessus de la trajectoire des empreintes 24.

L'installation selon l'invention comprend également un préhenseur 28 à ventouses 29 par aspiration d'air 30, comme le représente la fig. 2. Le préhenseur 28 est manipulé par un robot 31 jusqu'à un mécanisme articulé 32 comportant un plateau 33 de réception de l'élément 34. Le plateau articulé 32 étant placé sous une buse d'extrusion 35 reliée à la tuyauterie 6. Un vérin 36 pousse le mécanisme 32 jusqu'à des pare-brise en verre empilés sur une palette 38.

Le fonctionnement de l'installation est le suivant, le produit 4 est pompé dans le fût 3 par le groupe de pompage 5 qui alimente le pistolet 7 par le conduit 6.

Le produit 4 est entraîné vers l'orifice d'extrusion 18 par la rotation des pignons 21, 22 de l'engrenage. Les pignons 21, 22 sont entraînés et contrôlés en rotation par le moteur, donc le moteur contrôle le débit. Le robot 31 donne l'autorisation de mise en route du moteur et d'ouverture de la buse quand le pistolet 7 est en position de travail au-dessus d'une empreinte 24, le produit s'écoule à débit régulé, ce qui permet d'obtenir le remplissage répétitif d'une empreinte. Puis la table d'indexage 23 tourne d'un pas de manière à amener l'empreinte 24 qui vient d'être remplie sous le pousseur 27 et l'empreinte suivante sous le pistolet 7.

A ce moment le pousseur 27 dont la face d'appui peut être marquée, descend comme le représente la fig. 4. Ce pousseur descend à l'affleurement de l'empreinte ou dans l'empreinte 24 représentée à la fig. 5. Ensuite le pousseur se retire et l'élément chaud 39 représenté à la fig. 6, est formé. Le cycle se termine par la fermeture de la buse et l'arrêt simultané du moteur commandé par le robot et de la table.

Après plusieurs étapes du mouvement pas à pas de la table 23, les éléments refroidis sont sortis des empreintes 24 par le préhenseur 28 et apportés jusqu'à la buse 35 de dépose de produit liquide sur la face lisse de l'élément 34 ; puis le vérin 36 pousse jusqu'à collage de la face liquide l'élément 34 sur les pare-brise de verre.

Le robot 31 positionne et déplace le préhenseur 28, le pousseur 27 et la buse 35.

En variante le fond de l'empreinte 24 est marqué en bas relief et le pousseur est lisse.

Dans une deuxième variante le dispositif vide-fût comporte un groupe de pompage 5 fixe et un fût mobile disposé sur une chaise élévatrice de manière conforme au modèle d'utilité allemand G 94 20028.9.

L'installation représentée à la fig. 7 diffère de celle des fig. 1 et 2 en ce qu'elle ne comporte pas de buse automatique de dépôt de produit liquide 4 sur les éléments 34, ni des moyens de transfert automatique de ces éléments sur les pare-brise 37.

Les références correspondantes à celles des figures précédentes ont été conservées sur la fig. 7.

La table 23 comprend une empreinte circulaire très profonde 40 de manière à former un barreau de produit thermofusible. A la différence de l'installation précédente, l'installation de la fig. 7 comprend une caisse 41 que le robot remplit d'éléments 34. La fig. 8 représente un pistolet à colle 42 connu. Le barreau provenant de l'empreinte 40 est introduit dans le pistolet à colle 42, ce qui permet de déposer la face liquide sur les éléments 34 en faisant fondre l'extrémité du barreau.

La fig. 9 représente une autre variante d'installation de fabrication d'éléments selon le procédé de l'invention.

Cette installation comprend un fût 3 de produit thermofusible 4 pompé par un groupe de pompage 5 dans une tuyauterie 6 qui remplit le tube métallique de refroidissement 43 dont la sortie débouche sous la course 44 d'un couteau cranté 45 de manière à découper des pastilles de produit 4 pour former les éléments 39 selon l'invention.

La fig. 10 représente une variante de l'étape de réalisation de la face liquide de l'élément 34. Dans cette variante, l'élément 34 est apporté à proximité d'une source de chaleur 46 dont le rayonnement 47 fait fondre la face la plus proche, l'élément 34 étant constitué d'un matériau thermofusible.

Pour bien mettre en évidence les avantages de l'espaceur noté El, selon l'invention, et notamment les possibilités de réactivation thermique ou de réactivation par solvant de ses propriétés adhésives, par rapport à un espaceur connu noté EC tel un espaceur en PVC plastifié à 50 % et d'une dureté Shore A de 65, on a fabriqué des espaceurs en forme de pastilles à deux faces parallèles selon l'invention et on a réalisé les essais suivants.

L'espaceur est pressé entre deux plaques de verre plat (de dimensions 75x75x6 mm) disposées horizontalement sous l'action d'une charge de 5 kg placée sur la plaque supérieure pendant 1 minute. Les plaques de verre sont ensuite séparées à la main. Suivant leur état de surface (planéité, contamination) les espaceurs peuvent, soit adhérer à une des faces de verre (que l'on désigné par plaque (A)), soit tomber.

Dans le premier cas, la plaque de verre (A) sur laquelle adhère l'espaceur muni d'un thermocouple pour mesurer la température est placée sous une lampe lR. Une fois la température atteinte comme indiqué dans le tableau ci-après, le chauffage est supprimé et la plaque (B) est appliquée sur la face opposée de l'espaceur sous l'action d'une charge de 5 kg pendant 1 minute. Après refroidissement de 5 minutes, les deux plaques de verre sont ensuite séparées à la main, et la position de l'espaceur adhérant soit à la plaque (A), soit à la plaque (B) est notée. Les essais sont répétés sur 10 éprouvettes et les résultats rassemblés dans un tableau.

Dans le second cas, l'espaceur qui était tombé est déposé à la main sur une des plaques de verre (désignée A) et la procédure décrite ci-avant est appliquée.

Dans certains cas, la réactivation lR a été remplacée par le contact d'une goutte de solvant laissé à évaporer pendant un certain temps (indiqué au tableau).

Dans un certain nombre de cas, les espaceurs ont été contaminés par frottement par de la poudre de carbonate de calcium (granulométrie moyenne: 0,7 µm) pour simuler des échantillons à recycler, souillés par des poussières (El - S selon l'invention ou EC - S connu).

Le tableau 1 suivant regroupe les différents essais.

Le tableau 1 met en évidence les avantages de l'espaceur selon l'invention par rapport à un espaceur en PVC plastifié, notamment sa grande facilité de réactivation (ou activation) de sa face destinée à adhérer au vitrage et en particulier une température de réactivation très basse, permettant des cadences rapides.

| **Essais** | **Espaceur** | **Activation** | **Nombre d'échantillons sur la face** | |
|---|---|---|---|---|
| | | | **A** | **B** |
| 1 | EI | IR à 70°C | 0 | 10 |
| 2 | EI | Toluène + 5 min séchage | 0 | 10 |
| 3 | EI-S | IR à 100°C | 0 | 10 |
| 4 | EC | IR à 70°C | 0 | 10 |
| 5 | EC | IR à 100°C | 0 | 0 |
| 6 | EC | IR à 150°C | 5 | 5 |
| 7 | EC | IR à 160°C | 0 | 10 |
| 8 | EC | Cyclohexanone + 30 min séchage | 2 | 8 |
| 9 | EC-S | IR à 160° C | 2 | 8 |

L'espaceur selon l'invention absorbe très bien les chocs et son application pour des produits en feuilles fragiles tels que des vitrages s'avère très avantageuse, en particulier pour des vitrages pour véhicules, tels les pare-brise, lunettes arrières, vitrages latéraux, toits, qui sont normalement placés dans une position sensiblement verticale dans des palettes pour leur transport et leur stockage.

L'espaceur selon l'invention peut se présenter sous forme de pastilles de dimensions très variées. Il peut aussi se présenter sous forme de bandes minces continues ou discontinues. Il peut encore être déposé par extrusion directement sur le produit à séparer, notamment sous des formes de pastilles, de bandes minces discontinues ou continues.

L'espaceur est généralement déposé sur des produits en plaque notamment des feuilles de verre qui sont à la température ambiante des locaux. ll peut aussi être déposé notamment sur des feuilles de verre qui sont à une température plus élevée.

## Revendications

1. Espaceur destiné à s'intercaler temporairement entre deux produits en feuilles en particulier entre deux vitrages, et présentant une adhésion différenciée avec ces deux produits en feuilles, caractérisé en ce qu'il est essentiellement en un matériau thermofusible ayant une capacité d'absorption des chocs et une aptitude à procurer à une de ses deux faces une adhésion contrôlée et désirée avec les feuilles à séparer.

2. Espaceur selon la revendication 1, caractérisé en ce que la face apte à présenter des propriétés adhésives est réactivable par une modification de son état de surface par la chaleur ou par un solvant.

3. Espaceur selon la revendication 1, caractérisé en ce que la face apte à présenter des propriétés adhésives est réactivable par apport sur ladite face d'un matériau appartenant à la même famille, sous une forme liquide ou visqueuse.

4. Espaceur selon une des revendications 1 à 3, caractérisé en ce que le matériau à une température de fusion inférieure à 250°C et de préférence comprise entre 50 et 200°C.

5. Espaceur selon la revendication 4, caractérisé en ce que le matériau présente un intervalle étroit de température durant laquelle s'opère la fusion.

6. Espaceur selon une des revendications 1 à 5, caractérisé en ce que la face non adhésive est structurée.

7. Espaceur selon une des revendications 1 à 6, caractérisé en ce que le matériau est à base d'au moins un polymère ou copolymère du type polyéthylène avec chaines polaires.

8. Espaceur selon la revendication 7, caractérisé en ce que le matériau comprend exprimé en pourcentages en poids :
- 20 à 70 % d'un polymère ou copolymère du type polyéthylène avec chaînes polaires,
- 10 à 50 % d'un matériau présentant des propriétés d'absorbeur d'énergie,
- 10 à 50 % d'une cire,
- 10 à 40 % d'une huile minérale.

9. Espaceur selon la revendication 8, caractérisé en ce que le matériau comprend un copolymère éthylène-vinyl-acétate (EVA).

10. Espaceur selon la revendication 9, caractérisé en ce que le matériau comprend exprimé en pourcentages en poids :
- 20 à 70 % d'un copolymère EVA,
- 10 à 50 % d'un copolymère styrène-butadiène-styrène,
- 10 à 50 % d'une cire,
- 10 à 40 % d'une huile paraffinique.

11. Procédé de fabrication d'un espaceur dans lequel on remplit une empreinte de moule avec le matériau thermofusible liquide selon une des revendications 1 à 10 et on applique la face libre encore liquide de l'espaceur sur le produit à séparer.

12. Procédé de fabrication d'un espaceur dans lequel on remplit une empreinte de moule avec le matériau thermofusible liquide selon une des revendications 1 à 10, on refroidit le matériau thermofusible pour le solidifier, on démoule ledit élément séparateur solide, on rend liquide la face destinée à adhérer au vitrage à séparer et on applique la face liquide de l'élément séparateur sur le vitrage à séparer.

13. Procédé de fabrication d'un espaceur par extrusion d'un matériau selon une des revendications 1 à 10 directement sur le produit à séparer.
